# EUROPÄISCHE PATENTSCHRIFT

(11) **EP 1 709 502 B1**
(45) Veröffentlichungstag und Bekanntmachung des Hinweises auf die Patenterteilung: **15.08.2007**
(21) Anmeldenummer: 04706149.4
(22) Anmeldetag: 29.01.2004
(51) Int. Cl.: G05D 21/02, C02F 1/50

(54) **STEUERUNG DER BIOZIDZUGABE ZU PROZESSFL SSIGKEITEN**
CONTROLLING BIOCIDE ADDITION TO PROCESS LIQUIDS
COMMANDE DE L ADDITION DE BIOCIDE DANS DES LIQUIDES DE TRAIT EMENT

(43) Veröffentlichungstag der Anmeldung: 11.10.2006
(73) Patentinhaber: Henkel Kommanditgesellschaft auf Aktien, 40589 Düsseldorf (DE)
(72) Erfinder: RÜSSE, Steffen, 40789 Monheim (DE)
(86) Internationale Anmeldenummer: PCT/EP2004/000791
(87) Internationale Veröffentlichungsnummer: WO 2005/073822

(56) Entgegenhaltungen:
- DE-A- 10 054 000
- DE-A- 19 854 432
- US-A- 4 262 776
- US-A- 5 268 092

## Beschreibung

Die Erfindung betrifft die Verhinderung von unerwünschtem Wachstum anaerober Keime in Prozeßflüssigkeiten, die derartigen Keimen gute Wachstumsbedingungen bieten. Dabei handelt es sich um Prozeßflüssigkeiten, die zwar in einer Arbeitszone in innigen Kontakt mit Luft kommen, aber danach in einer Ruhezone nur wenig Kontakt mit Luft aufweisen. Sofern diese Prozeßflüssigkeiten ein ausreichendes Nährstoffangebot für Mikroben aufweisen, kann in Ruhezonen der Prozeßflüssigkeit der Sauerstoffgehalt durch aerobe Keime rasch aufgezehrt werden, so daß die Bedingungen anaerob werden. Hierdurch wird das Wachstum anaerober Keime begünstigt, deren Stoffwechselprodukte häufig sehr übelriechend sind. Dadurch kann es in der Umgebung der Prozeßflüssigkeit zu starken Geruchsbelästigungen kommen.

Ein Beispiel einer derartigen Prozeßflüssigkeit, in der es zu den genannten Problemen kommen kann, ist das Umlaufwasser aus Lackierkabinen mit Naßauswaschung. Beispielsweise werden zur Lackierung von Automobilkarosserien Spritzkabinen mit Naßabscheidung des anfallenden Oversprays eingesetzt. Durch Versprühen von Wasser wird innerhalb der Spritzkabine ein feinverteilter Wassernebel erzeugt, der die Lackbestandteile des Oversprays aufnimmt und aus der Kabine austrägt. Ebenso wird die Abluft aus solchen Lackierkabinen mit Wasser ausgewaschen, in der Regel in einem Venturi-Wäscher, um zu verhindern, daß Lackpartikel in die Außenluft gelangen. Im Sinne der vorstehenden allgemeinen Beschreibung stellt die Zone, in der die Lackpartikel aus der Luft mit Wasser ausgewaschen werden, die Arbeitszone dar. Hier kommt das Umlaufwasser also in intensiven Kontakt mit Luft. Anschließend wird das Umlaufwasser einem Systemtank und gegebenenfalls weiteren Entsorgungsstufen zugeführt. Diese stellen Ruhezonen im Sinne der vorstehenden allgemeinen Beschreibung dar. Im Systemtank, der nur eine geringe Kontaktfläche mit der Luft hat, findet eine Trennung der abgeschiedenen und koagulierten Lackbestandteile vom Umlaufwasser statt, beispielsweise durch Flotation oder Sedimentation.

Sehr ähnliche Verhältnisse findet man in Anlagen zur Anwendung von Kühlschmierstoffen, die in der metallverarbeitenden Industrie für unterschiedliche Umformprozesse wie Walzen, Bohren, Drehen oder Fräsen eingesetzt werden. Häufig verwendet man hierbei wäßrige Kühlschmierstoffe, die als reine Wasserphase oder als Öl-in-Wasser-Emulsion vorliegen können. In der Arbeitszone werden diese Kühlschmierstoffe auf das zu bearbeitende Werkstück aufgebracht, in der Regel aufgespritzt. Sie kühlen das Werkstück während der Bearbeitung und führen Späne und Metallabrieb ab. Hierbei kommen die Kühtschmierstoffe in innigen Kontakt mit Luft. Danach werden die Kühlschmierstoffe in der Regel in einem Tank gesammelt, um - ggf. nach Abscheidung von Fremdstoffen - wieder zur Metallbearbeitung eingesetzt zu werden. Dieser Tank stellt im Sinne der vorliegenden Beschreibung die Ruhezone dar.

Bei den beiden vorstehend genannten Beispielen kommt es in der Regel zu einem Wachstum von Mikroorganismen in der Ruhezone, da diese Prozeßflüssigkeiten hinsichtlich Temperatur und Nährstoffangebot gute Wachstumsbedingungen bieten. Dies führt häufig zu den eingangs erwähnten Geruchsproblemen, insbesondere dann, wenn durch Sauerstoffzehrung in der Ruhezone die Wachstumsbedingungen für anaerobe Keime günstig werden.

Bisher hat man dieses Problem auf zweierlei Weise bekämpft: Die eine Möglichkeit besteht darin, die Prozeßflüssigkeit ständig mit Biozid zu versetzen und auf diese Weise zu versuchen, das Wachstum von Mikroorganismen zu unterdrücker siehe z. B. DE 198 54 432 A. Diese nicht am tatsächlichen Bedarf orientierte Biozidzugabe ist zumindest unwirtschaftlich. Sie kann zu Umweltproblemen führen, wenn die biozidhaltigen Prozeßflüssigkeiten ganz oder teilweise entsorgt werden sollen. Beim Kontakt von Anlagenpersonal mit den versprühten biozidhaltigen Prozeßflüssigkeiten können gesundheitliche Probleme auftreten. Und schließlich kann die ständige Gegenwart von Bioziden dazu führen, daß sich biozidresistente Keime entwickeln, die dann nur durch höhere Biozidmengen oder durch andere Biozide bekämpft werden können.

Die zweite Möglichkeit, Geruchsprobleme im Ansatz zu verhindern, besteht darin, in mehr oder weniger regelmäßigen Abständen die Keimzahlen zu kontrollieren und dann Biozid zuzugeben, wenn die Keimzahl einen Schwellenwert übersteigt. Dies ist zwar sinnvoller als das vorstehend genannte Vorgehen, berücksichtigt jedoch nicht die Art der Keime und das vorhandene Nährstoffangebot, d. h. erlaubt keine Aussage darüber, ob eine starke Vermehrung anaerober Keime droht. Also wird auch nach dieser Methode in der Regel mehr Biozid zugegeben, als eigentlich erforderlich wäre. Ein weiterer Nachteil der Steuerung der Biozidzugabe über eine Keimzahlbestimmung liegt darin, dass diese mehrere Tage in Anspruch nimmt. Eine erforderliche Biozidzugabe erfolgt daher sehr zeitverzögert.

Das amerikanische Patent US 5 224 051 beschreibt eine Überwachungseinrichtung für ein Kühlschmierstoffsystem. Dabei werden im Kühlschmierstoff verschiedene Parameter durch Sensoren gemessen, beispielsweise der Sauerstoffgehalt. Die Messdaten werden in einem Computersystem analysiert. Je nach Resultat der Messungen werden entweder automatisch oder manuell Komponenten zu dem Kühlschmierstoffsystem zugegeben. Bei diesen Komponenten kann es sich beispielsweise um Biozid handeln. Das Dokument macht jedoch keine Aussage darüber, unter welchen Bedingungen die Biozidzugabe erfolgen und wie viel Biozid dem System zugegeben werden soll.

Demnach besteht ein Bedarf nach einem verbesserten Verfahren zur Steuerung der Biozidzugabe zu derartigen wässrigen Prozessflüssigkeiten. Durch die Steuerung der Biozidzugabe soll der Biozidverbrauch minimiert und/oder das Entstehen biozidresistenter Keime möglichst verhindert werden. Andererseits soll rechtzeitig und ausreichend Biozid zugegeben werden, um eine Geruchsbelästigung zu vermeiden.

Die Lösung dieser Aufgabe schließt ein, dass man die Biozidmenge minimiert. Dies kann gemäss 2 unterschiedlichen Ausführungsformen zum einen dadurch erfolgen, dass man nur so viel Biozid im Bedarfsfall, d. h. bei abnehmendem Sauerstoffgehalt, zugibt, dass der Biozidgehalt der Prozessflüssigkeit innerhalb vorgegebener Grenzen liegt. Eine Alternative oder eine Ergänzung hierzu liegt darin, dass man nicht sofort Biozid zugibt, nachdem ein Abfall des Sauerstoffgehalts festgestellt wurde, sondern dass man zunächst eine anlagenspezifische Wartezeit verstreichen lässt, bevor man das Biozid zugibt. Durch diese beiden alternativen oder sich ergänzenden Maßnahmen minimiert man den Biozidverbrauch, vermeidet das Auftreten biozidresistenter Stämme von Mikroorganismen und unterdrückt dennoch wirkungsvoll eine Geruchsbelästigung.

Die vorliegende Erfindung betrifft im ersten Aspekt ein Verfahren zur Steuerung der Biozidzugabe zu einer wässrigen Prozessflüssigkeit in einer Anlage, in der sowohl eine Vermischung der Prozessflüssigkeit mit Luft in einer Arbeitszone als auch eine Beruhigung der Prozessflüssigkeit in einer Beruhigungszone eintritt, wobei in der Prozessflüssigkeit Mikroorganismen wachsen können und wobei man entweder den Sauerstoffgehalt oder das Redoxpotential der Prozessflüssigkeit misst, dadurch gekennzeichnet, dass man dann, wenn entweder der Sauerstoffgehalt oder das Redoxpotential einen jeweils vorgegebenen Mindestwert unterschreitet, soviel Biozid zugibt, dass der Biozidgehalt der Prozessflüssigkeit oberhalb von 10 mg/l, insbesondere oberhalb von 50 mg/l, jedoch unterhalb von 200 mg/l, insbesondere unterhalb von 150 mg/l liegt.

In ihrem zweiten Aspekt umfasst die Erfindung ein Verfahren zur Steuerung der Biozidzugabe zu einer wässrigen Prozessflüssigkeit in einer Anlage, in der sowohl eine Vermischung der Prozessflüssigkeit mit Luft in einer Arbeitszone als auch eine Beruhigung der Prozessflüssigkeit in einer Beruhigungszone eintritt, wobei in der Prozessflüssigkeit Mikroorganismen wachsen können, wobei man entweder den Sauerstoffgehalt oder das Redoxpotential der Prozessflüssigkeit misst und Biozid dann in die Prozessflüssigkeit dosiert, wenn entweder der Sauerstoffgehalt oder das Redoxpotential einen jeweils vorgegebenen Mindestwert unterschreitet, dadurch gekennzeichnet, dass man das Biozid frühestens einen Tag und spätestens 6 Wochen nach dem Zeitpunkt zugibt, an dem entweder der Sauerstoffgehalt oder das Redoxpotential einen jeweils vorgegebenen Mindestwert unterschritten und seither nicht wieder überschritten hat.

Dabei gibt man auch bei dieser Verfahrensweise vorzugsweise so viel Biozid zu, dass der Biozidgehalt der Prozessflüssigkeit oberhalb von 10 mg/l, insbesondere oberhalb von 50 mg/l, jedoch unterhalb von 200 mg/l, insbesondere unterhalb von 150 mg/l liegt.

Die Wartezeit zwischen dem Zeitpunkt, an dem entweder der Sauerstoffgehalt oder das Redoxpotential einen jeweils vorgegebenen Mindestwert unterschritten hat, und dem Beginn der Biozidzugabe beträgt vorzugsweise mindestens 1 Woche, insbesondere mindestens 2 Wochen, jedoch vorzugsweise maximal 4 Wochen, insbesondere vorzugsweise maximal 3 Wochen. Man gibt also das Biozid nicht unmittelbar nach der Feststellung zu, dass der Sauerstoffgehalt der Prozessflüssigkeit in der Beruhigungszone einen vorgegebenen Mindestwert unterschritten hat. Vielmehr wartet man zunächst die vorgegebene Zeitspanne ab. Sollte während dieser Wartezeit der Sauerstoffgehalt wieder über den Schwellenwert ansteigen, ist selbstverständlich keine Biozidzugabe erforderlich. Vielmehr beobachtet man während der Wartezeit, ob der Sauerstoffgehalt bzw. das Redoxpotential weiterhin unter den vorgegebenen Mindestwerten bleiben. Man toleriert also für eine bestimmte Zeitdauer das Vorliegen (nahezu) anaerober Bedingungen, bevor man durch Biozidzugabe eingreift.

Die Zeitspanne, die man zwischen Abfall des Sauerstoffgehalts bzw. des Redoxpotentials unter den Schwellenwert und Beginn der Biozidzugabe verstreichen lässt, hängt von der jeweiligen Anlage ab und muss empirisch bestimmt werden. Dies kann beispielsweise dadurch erfolgen, dass man wie beschrieben Sauerstoffgehalt bzw. Redoxpotential misst, jedoch auch bei Unterschreiten der Mindestgrenzen zunächst so lange kein Biozid zugibt, bis eine Geruchsentwicklung auftritt. Diese Zeitspanne stellt dann für die zukünftige Vorgehensweise die Obergrenze für die Wartezeit zwischen Unterschreiten der Mindestwerte und Biozidzugabe dar. Zur Sicherheit wird man in Zukunft jedoch einige Tage früher mit der Biozidzugabe beginnen. Jedoch ist es in der Regel nicht erforderlich, Biozid zuzugeben, bevor nicht mindestens die Hälfte der empirisch festgestellten maximalen Wartezeit verstrichen ist. Bei dieser Vorgehensweise ist es beispielsweise nicht erforderlich, nach einem Anlagenstillstand (z.B. Wochenende), an dem sich die gesamte Prozessflüssigkeit in der Beruhigungszone gesammelt und hierdurch nur wenig Kontakt mit der Luft hat, sofort Biozid zuzugeben, weil ein Abfall des Sauerstoffgehaltes festgestellt wurde.

Die Begriffe der "Arbeitszone" und "Beruhigungszone" wurden einleitend bereits erläutert. Vorzugsweise mißt man den Sauerstoffgehalt oder das Redoxpotential der Prozeßflüssigkeit in der Beruhigungszone, da vor allem in dieser eine Vermehrung anaerober Keine droht.

Die vorliegende Erfindung beruht auf der Erkenntnis, daß sich der Sauerstoffgehalt oder das hiermit zusammenhängende Redoxpotential der Prozeßflüssigkeit als Indikator dafür eignen, daß sich die Bedingungen in der Prozeßflüssigkeit in der Weise ändern, daß sie für die Vermehrung von anaeroben Keimen günstig werden. Ein hinreichend hoher Sauerstoffgehalt oder ein dementsprechend hohes Redoxpotential in der Ruhezone derProzeßflüssigkeit zeigen an, daß entweder kein Wachstum sauerstoffverbrauchender aerober Keime stattfindet, beispielsweise weil das Nährstoffangebot unzureichend ist, oder daß der Sauerstoffeintrag in die Prozeßflüssigkeit in der Arbeitszone ausreichend groß ist, um die Sauerstoffzehrung in der Ruhezone auszugleichen. Im ersten Fall ist eine Biozidzugabe nicht erforderlich, da überhaupt die Wachstumsbedingungen für Mirkoben schlecht sind. Im zweiten Fall ist ebenfalls keine Biozidzugabe erforderlich, obwohl ggf. eine hohe Keimzahl vorliegen kann, da durch ausreichende Sauerstoffzufuhr gewährleistet ist, daß sich keine günstigen Wachstumsbedingungen für anaerobe Keime einstellen. Im Gegensatz zur bisherigen Praxis der Kupplung der Biozidzugabe an die Keimzahl gibt man also auch im letztgenannten Fall kein Biozid zu, obwohl eine hohe Keimzahl vorliegen kann.

Erst wenn der Abfall der Sauerstoffkonzentration und/oder des Redoxpotentials anzeigen, daß eine starke Sauerstoffzehrung durch aerobe Mikroben stattfindet, wird das Keimwachstum durch Biozidzugabe eingedämmt. Um für eine rasche Vermischung des Biozids mit der Prozeßflüssigkeit zu sorgen, gibt man dieses vorzugsweise an einer Stelle starker Turbulenz zu.

Sauerstoffgehalt oder insbesondere Redoxpotential kann man kontinuierlich oder diskontinuierlich messen. Eine kontinuierliche Messung oder eine diskontinuierliche Messung in kurzen Zeitabständen erlauben es, die Veränderung der Sauerstoffzehrung zu beobachten und das Biozid bei starker Sauerstoffzehrung zuzugeben. Jedoch genügt auch eine diskontinuierliche Messung von Sauerstoffgehalt oder Redoxpotential in längeren Zeitabständen, beispielsweise in Zeitintervallen im Bereich von einer Stunde bis einer Woche, beispielsweise einmal pro Tag. Bei dieser Vorgehensweise legt man fest, ab welcher Untergrenze des Sauerstoffgehalts oder des Redoxpotentials Biozid zugegeben werden soll. Hierbei kann man zunächst anlagenspezifische Erfahrung sammeln, indem man zunächst auf eine Biozidzugabe verzichtet und beobachtet, ab welcher Untergrenze von Sauerstoffgehalt oder Redoxpotential bzw. nach welcher Zeitspanne nach Unterschreiten der Untergrenze Geruchsprobleme auftreten.

Hat man Biozid zugegeben und hierdurch die Zahl lebender Keime verringert, wird es einige Zeit dauern, bis sich aufgrund der Vermischung der Prozeßflüssigkeit in Arbeitsund Ruhezone wieder ein Sauerstoffgehalt oder ein Redoxpotential eingestellt hat, das keine Vermehrung anaerober Keime mehr befürchten läßt. Daher ist es wenig sinnvoll, kurz nach Biozidzugabe bereits wieder Sauerstoffgehalt oder Redoxpotential zu messen und erneut Biozid zu dosieren, ohne abgewartet zu haben, bis sich Sauerstoffgehalt oder Redoxpotential wieder erholt haben. Daher ist es sinnvoll, nach einer Biozidzugabe mindestens eine Stunde lang zu warten, bevor man erneut Biozid zugibt. Alternativ hierzu kann man nach der Biozidzugabe mit der Messung von Sauerstoffgehalt oder Redoxpotential fortfahren, wobei man ein Anstieg von Sauerstoffgehalt oder Redoxpotential beobachten sollte, wenn Prozeßflüssigkeit zwischen Ruhezone und Arbeitszone zirkuliert. Man gibt frühestens dann erneut Biozid zu, wenn Sauerstoffgehalt oder Redoxpotential einen Maximalwert überschritten haben und wieder abfallen.

Beispielsweise kann man dann Biozid in die Prozeßflüssigkeit dosieren, wenn entweder der Sauerstoffgehalt einen Wert von 2 mg/l, insbesondere 1 mg/l oder das Redoxpotential, ausgedrückt relativ zu einer Silber/Silberchloridelektrode, einen Wert von - 200 mV, insbesondere von - 300 mV unterschreitet, d. h. stärker negativ wird als dieser Grenzwert. Für die Messung des Sauerstoffgehalts kann beispielsweise eine sauerstoffspezifische Elektrode verwendet werden. Das Redoxpotential mißt man am einfachsten mit Hilfe einer Redox-Elektrode, beispielsweise mit einer handelsüblichen Meßzelle, die eine Platin-Elektrode als Arbeitselektrode und eine Silber/SilberchloridElektrode als Bezugselektrode enthält. Selbstverständlich kann man andere geeignete Bezugselektroden wie beispielsweise eine Kalomel-Elektrode verwenden. Die weiter oben angegebene Untergrenze für das Redoxpotential ist dann entsprechend umzurechnen. Die Verwendung geeigneter Elektroden hat den Vorteil, daß die Messung vollautomatisch und kontinuierlich erfolgen kann.

Wenn entweder der Sauerstoffgehalt oder das Redoxpotential einen jeweils vorgegebenen Mindestwert unterschreitet, gibt man vorzugsweise so viel Biozid zu, daß der Biozidgehalt der Prozeßflüssigkeit nach vollständigem Vermischen oberhalb von 10 mg/l, insbesondere oberhalb von 50 mg/l, jedoch vorzugsweise unterhalb von 200 mg/l, insbesondere unterhalb von 150 mg/l liegt. Selbstverständlich sind die genauen Werte abhängig vom verwendeten Biozid und können der Gebrauchsanleitung für das Biozid entnommen werden.

Vorzugsweise läßt man den Biozidgehalt der Prozeßflüssigkeit zwischen 2 Biozidzugaben auf einen Wert unterhalb vom 50 mg/l, insbesondere unterhalb von 10 mg/l und besonders bevorzugt auf einen Wert unterhalb der Nachweisgrenze absinken. In den genannten Prozeßflüssigkeiten tritt ein Verlust an Biozid insbesondere dadurch ein, daß sich dieses an Schlamm wie beispielsweise Metallabrieb oder Lackkoagulat adsorbiert und mit diesem aus der Prozeßflüssigkeit ausgetragen wird. Man verfährt also vorzugsweise genau entgegengesetzt zur bisherigen Verfahrensweise, bei der man bemüht war, einen Mindestgehalt an Biozid in der Prozeßflüssigkeit aufrecht zu erhalten. Nach dem erfindungsgemäßen Verfahren kann hierauf verzichtet werden. Dies führt nicht nur zu einer Einsparung von Biozid, sondern insbesondere auch dazu, daß sich in der Prozeßflüssigkeit kein Selektionsdruck für Biozid-resistente Keime einstellt. Daher besteht weniger die Gefahr, daß aufgrund der bevorzugten Entwicklung Biozid-restistenter Keime die Bioziddosierung erhöht bzw. auf wirksamere, aber auch kritischer einzustufende Biozide ausgewichen werden muß.

Besonders bevorzugt ist es, daß das beschriebene Verfahren vollautomatisch, d. h. ohne menschliches Eingreifen abläuft. Hierfür kann beispielsweise eine Biozidlösung in einem Vorratsbehälter zur Verfügung gestellt werden, aus dem sie durch Aktivieren einer Pumpe und/oder eines Ventils automatisch in die Prozeßflüssigkeit in vorgegebener Menge dosiert wird, wenn ein Unterschreiten der vorgewählten Untergrenzen von Sauerstoffgehalt oder Redoxpotential festgestellt wird und gemäß zweiter Ausführungsform die vorgewählte Wartezeit verstrichen ist.

Verwendet man für die Messung Meßelektroden, kann vorgesehen werden, daß diese Elektroden automatisch gereinigt und/oder einer Funktionsprüfung unterzogen werden. Weiterhin kann automatisch überprüft werden, beispielsweise mit Hilfe eines Durchflußmessers, ob tatsächlich Biozidlösung in die Prozeßlösung dosiert wird oder ob beispielsweise eine Funktionsstörung von Ventilen und/oder Pumpen vorliegt. Schließlich kann der Füllstand im Vorratsbehälter der Biozidlösung automatisch überwacht werden. Wird ein Mangel an Biozidlösung oder eine Fehlfunktion der Dosiereinrichtung festgestellt, kann das Bedienungspersonal der Anlage automatisch informiert werden, beispielsweise durch eine Alarmeinrichtung oder durch Ausgabe einer Meldung auf einem Ausgabegerät. Selbstverständlich sollte es auch jederzeit möglich sein, den Sauerstoffgehalt oder das Redoxpotential manuell zu messen und je nach Ergebnis der Messung Biozid zuzudosieren.

Das erfindungsgemäße Verfahren kann unabhängig von der Art des verwendeten Biozids ausgeführt werden. Geeignet sind alle Biozide, die auch derzeit bei den genannten Prozeßflüssigkeiten eingesetzt werden. Beispielsweise kann das Biozid ausgewählt sein aus Isothiazolinen und Dibromnitrilopropionamiden.

Wie einleitend beschrieben ist das erfindungsgemäße Verfahren insbesondere für Prozeßflüssigkeiten geeignet, bei denen es sich entweder um das Umlaufwasser einer Lackieranlage handelt, in der Lackpartikel mit Hilfe des Umlaufwassers aus der Luft ausgewaschen werden, oder um eine ölhaltige Kühlschmierstoffemulsion. Aufgrund des guten Nährstoffangebots treten insbesondere bei diesen ausgewählten Prozeßflüssigkeiten häufig Geruchsprobleme auf, die auf Stoffwechselprodukte anaerober Keime zurückzuführen sind.

Das erfindungsgemäße Verfahren hat demnach gegenüber den üblichen Verfahren also die Vorteile, daß nur dann Biozid zudosiert wird, wenn dies auch wirklich erforderlich ist, daß dies vollautomatisch gesteuert werden kann, daß der Biozidverbrauch gesenkt wird und daß dadurch, daß der Biozidgehalt zwischen 2 Zugaben auf praktisch Null absinken kann, keine Biozid-resistenten Keime begünstigt werden.

## Patentansprüche

1. Verfahren zur Steuerung der Biozidzugabe zu einer wässrigen Prozessflüssigkeit in einer Anlage, in der sowohl eine Vermischung der Prozessflüssigkeit mit Luft in einer Arbeitszone als auch eine Beruhigung der Prozessflüssigkeit in einer Beruhigungszone eintritt, wobei in der Prozessflüssigkeit Mikroorganismen wachsen können, wobei man entweder den Sauerstoffgehalt oder das Redoxpotential der Prozessflüssigkeit misst und Biozid dann in die Prozessflüssigkeit dosiert, wenn entweder der Sauerstoffgehalt oder das Redoxpotential einen jeweils vorgegebenen Mindestwert unterschreitet, **dadurch gekennzeichnet, dass** man das Biozid frühestens einen Tag und spätestens 6 Wochen nach dem Zeitpunkt zugibt, an dem entweder der Sauerstoffgehalt oder das Redoxpotential einen jeweils vorgegebenen Mindestwert unterschritten und seither nicht wieder überschritten hat.

2. Verfahren nach Anspruch 1, **dadurch gekennzeichnet; dass** man dann, wenn entweder der Sauerstoffgehalt oder das Redoxpotential einen jeweils vorgegebenen Mindestwert unterschreitet, soviel Biozid zugibt, dass der Biozidgehalt der Prozessflüssigkeit oberhalb von 10 mg/l, insbesondere oberhalb von 50 mg/l, jedoch unterhalb von 200 mg/l, insbesondere unterhalb von 150 mg/l liegt.

3. Verfahren nach einem oder beiden der Ansprüche 1 und 2, **dadurch gekennzeichnet, dass** man das Biozid frühestens eine Woche, insbesondere frühestens zwei Wochen, und spätestens 4 Wochen, insbesondere spätestens drei Wochen nach dem Zeitpunkt zugibt, an dem entweder der Sauerstoffgehalt oder das Redoxpotential einen jeweils vorgegebenen Mindestwert unterschritten und seither nicht wieder überschritten hat.

4. Verfahren nach einem oder mehreren der Ansprüche 1 bis 3, **dadurch gekennzeichnet, dass** man den Sauerstoffgehalt oder das Redoxpotential in der Beruhigungszone der Prozessflüssigkeit misst.

5. Verfahren nach einem, oder mehreren der Ansprüche 1 bis 4, **dadurch gekennzeichnet, dass** man dann Biozid in die Prozessflüssigkeit dosiert, wenn entweder der Sauerstoffgehalt einen Wert von 2 mg/l oder das Redoxpotential, ausgedrückt relativ zu einer Ag/AgCl Elektrode, einen Wert von - 200 mV unterschritten hat.

6. Verfahren nach einem oder mehreren der Ansprüche 1 bis 5, **dadurch gekennzeichnet, dass** der Biozidgehalt der Prozessflüssigkeit zwischen zwei Biozidzugaben auf einen Wert unterhalb von 50 mg/l, insbesondere unterhalb von 10 mg/l absinkt.

7. Verfahren nach einem oder mehreren der Ansprüche 1 bis 6, **dadurch gekennzeichnet, dass** es ohne menschliches Eingreifen automatisch abläuft.

8. Verfahren nach einem oder mehreren der Ansprüche 1 bis 7, **dadurch gekennzeichnet, dass** es sich bei der Prozessflüssigkeit um das Umlaufwasser einer Lackieranlage handelt, in der Lackpartikel mit Hilfe des Umlaufwassers aus der Luft ausgewaschen werden.

9. Verfahren nach einem oder mehreren der Ansprüche 1 bis 7, **dadurch gekennzeichnet, dass** es sich bei der Prozessflüssigkeit um eine ölhaltige Kühlschmierstoffemulsion handelt.

## Claims

1. Method for controlling the addition of biocide to an aqueous process liquid in an installation in which there is not only mixing of the process liquid with air in a working zone but also calming of the process liquid in a calming zone, it being possible for microorganisms to grow in the process liquid, where either the oxygen content or the redox potential of the process liquid is measured and biocide is metered into the process liquid when either the oxygen content or the redox potential falls below a respective predetermined minimum level, **characterized in that** the biocide is added no earlier than one day and no later than 6 weeks after the time at which either the oxygen content or the redox potential fell below a respective predetermined minimum level and did not thereafter exceed that level.

2. Method according to Claim 1, **characterized in that**, when either the oxygen content or the redox potential falls below a respective predetermined minimum level, biocide is added in a quantity such that the biocide content of the process liquid is above 10 mg/l, more particularly above 50 mg/l, but below 200 mg/l, more particularly below 150 mg/l.

3. Method according to one or both of Claims 1 and 2, **characterized in that** the biocide is added no earlier than one week, more particularly no earlier than two weeks, and no later than 4 weeks, more particularly no later than three weeks, after the time at which either the oxygen content or the redox potential fell below a respective predetermined minimum level and did not exceed that level again thereafter.

4. Method according to one or more of Claims 1 to 3, **characterized in that** the oxygen content or the redox potential is measured in the calming zone of the process liquid.

5. Method according to one or more of Claims 1 to 4, **characterized in that** biocide is metered into the process liquid when either the oxygen content has fallen below a level of 2 mg/l or the redox potential, expressed relative to an Ag/AgCl electrode, has fallen below a level of -200 mV.

6. Method according to one or more of Claims 1 to 5, **characterized in that** the biocide content of the process liquid falls between two additions of biocide to a level below 50 mg/l, more particularly below 10 mg/l.

7. Method according to one or more of Claims 1 to 6, **characterized in that** it runs automatically without human intervention.

8. Method according to one or more of Claims 1 to 7, **characterized in that** the process liquid is the circulation water of a painting installation in which paint particles are scrubbed from the air with the aid of the circulation water.

9. Method according to one or more of Claims 1 to 7, **characterized in that** the process liquid is an oil-containing cooling lubricant emulsion.

## Revendications

1. Procédé pour la commande de l'addition de biocide à un liquide de traitement aqueux dans une installation dans laquelle intervient aussi bien un mélange du liquide de traitement avec l'air dans une zone de travail qu'une stabilisation du liquide de traitement dans une zone de stabilisation, des micro-organismes étant à même de croître dans le liquide de traitement, dans lequel on mesure, soit la teneur en oxygène, soit le potentiel redox du liquide de traitement et on introduit du biocide de manière dosée dans le liquide de traitement, lorsque soit la teneur en oxygène, soit le potentiel redox dépasse vers le bas une valeur minimale respectivement prédéfinie, **caractérisé en ce qu'**on ajoute le biocide au plus tôt un jour et au plus tard 6 semaines après le moment auquel, soit la teneur en oxygène, soit le potentiel redox a dépassé vers le bas une valeur minimale respectivement prédéfinie et, depuis lors, ne l'a plus redépassée vers le haut.

2. Procédé selon la revendication 1, **caractérisé en ce que** l'on ajoute du biocide, lorsque soit la teneur en oxygène, soit le potentiel redox, dépasse vers le bas une valeur minimale respectivement prédéfinie, en une quantité telle que la teneur du liquide de traitement en biocide est supérieure à 10 mg/l, en particulier supérieure à 50 mg/l, néanmoins inférieure à 200 mg/l, en particulier inférieure à 150 mg/l.

3. Procédé selon l'une quelconque des revendications 1 et 2 ou les deux, **caractérisé en ce qu'**on ajoute le biocide au plus tôt une semaine, en particulier au plus tôt deux semaines et au plus tard 4 semaines, en particulier au plus tard trois semaines après le moment auquel, soit la teneur en oxygène, soit le potentiel redox a dépassé vers le bas une valeur minimale respectivement prédéfinie et, depuis lors, ne l'a plus redépassée vers le haut.

4. Procédé selon une ou plusieurs des revendications 1 à 3, **caractérisé en ce qu'**on mesure la teneur en oxygène ou le potentiel redox dans la zone de stabilisation du liquide de traitement.

5. Procédé selon une ou plusieurs des revendications 1 à 4, **caractérisé en ce qu'**on introduit du biocide de manière dosée dans le liquide de traitement lorsque, soit la teneur en oxygène a dépassé vers le bas une valeur de 2 mg/l, soit le potentiel redox, exprimé par rapport à une électrode Ag/AgCl, a dépassé vers le bas une valeur de -200 mV.

6. Procédé selon une ou plusieurs des revendications 1 à 5, **caractérisé en ce que** la teneur du liquide de traitement en biocide chute, entre deux additions de biocide, à une valeur inférieure à 50 mg/l, en particulier inférieure à 10 mg/l.

7. Procédé selon une ou plusieurs des revendications 1 à 6, **caractérisé en ce qu'**il est mis en oeuvre de manière automatique en l'absence d'une intervention humaine.

8. Procédé selon une ou plusieurs des revendications 1 à 7, **caractérisé en ce qu'**il s'agit, en ce qui concerne le liquide de traitement, de l'eau de circulation d'une installation de peinture, dans laquelle des particules de peinture sont évacuées de l'air par lavage à l'aide de l'eau de circulation.

9. Procédé selon une ou plusieurs des revendications 1 à 7, **caractérisé en ce qu'**il s'agit, en ce qui concerne le liquide de traitement, d'une émulsion huileuse d'un réfrigérant lubrifiant.
